# EUROPÄISCHE PATENTSCHRIFT

(11) **EP 1 646 847 B1**
(45) Veröffentlichungstag und Bekanntmachung des Hinweises auf die Patenterteilung: **06.04.2011**
(21) Anmeldenummer: 04738720.4
(22) Anmeldetag: 18.06.2004
(51) Int. Cl.: G01F 1/68

(54) **VORRICHTUNG ZUR BESTIMMUNG WENIGSTENS EINES PARAMETERS EINES IN EINER LEITUNG STRÖMENDEN MEDIUMS**
DEVICE FOR DETERMINING AT LEAST ONE PARAMETER OF A MEDIUM FLOWING IN A LINE
DISPOSITIF POUR DETERMINER AU MOINS UN PARAMETRE D'UN FLUIDE QUI CIRCULE DANS UNE CONDUITE

(30) Priorität: 14.07.2003 DE 10331753; 06.05.2004 DE 102004022271
(43) Veröffentlichungstag der Anmeldung: 19.04.2006
(73) Patentinhaber: ROBERT BOSCH GMBH, 70442 Stuttgart (DE)
(72) Erfinder: KONZELMANN, Uwe, 71679 Asperg (DE); MARBERG, Henning, 71263 Weil der Stadt (DE); GMELIN, Christoph, 70597 Stuttgart (DE)
(86) Internationale Anmeldenummer: PCT/DE2004/001270
(87) Internationale Veröffentlichungsnummer: WO 2005/008189

(56) Entgegenhaltungen:
- EP-A- 0 803 712
- DE-A- 10 135 142
- US-A- 5 485 746
- US-A- 5 948 975
- US-B1- 6 185 998

## Beschreibung

### Stand der Technik

Die Erfindung betrifft eine Vorrichtung zur Bestimmung wenigstens eines Parameters eines in einer Leitung strömenden Mediums mit den Merkmalen des Oberbegriffs des unabhängigen Anspruchs 1.

Eine derartige Vorrichtung ist beispielsweise aus der DE 101 35 142 A1 bekannt und wird beispielsweise im Ansaugtrakt einer Brennkraftmaschine eingesetzt, um den der Brennkraftmaschine durch eine Leitung zugeführten Luftmassenstrom zu bestimmen. Ein mit einem Bypass-Teil versehener Abschnitt einer Sensoreinrichtung ist durch eine Einstecköffnung in das Leitungsteil eingesetzt. Das Bypass-Teil weist eine Kanalstruktur mit einem Einlassbereich auf, von dem ein mit dem Messelement versehener Messkanal abzweigt. Der Eingangsbereich weist weiterhin eine Ausscheidungszone mit wenigstens einer Ausscheidungsöffnung auf, die sich an wenigstens einer Seitenwand des Bypass-Teils in den Leitungsdurchgang öffnet. Die Ausscheidungszone dient zur Ausscheidung von Flüssigkeits- und/oder Festkörperpartikeln aus der Kanalstruktur, die so davon abgehalten werden, in den mit dem Messelement versehenen Messkanal einzudringen und das Messelement zu verunreinigen.

Die Kanten, welche durch die der Hauptströmungsrichtung zugewandte Frontseite und die Seitenwände des in die Leitung eingeführten Bypass-Teils gebildet werden, bilden bei den bekannten Vorrichtungen Anströmkanten aus, an denen Gebiete abgelöster Strömung entstehen, die einerseits große Druckverluste und andererseits ein nicht beabsichtigtes Pulsieren der Strömung bewirken können, infolgedessen Druckschwankungen durch die Ausscheidungsöffnung auf den von dem Einlassbereich abzweigenden Messkanal übertragen werden. Durch die Druckschwankungen im Messkanal kann das Ausgangssignal des Messelementes erheblich verfälscht werden.

### Vorteile der Erfindung

Die erfindungsgemäße Vorrichtung zur Bestimmung wenigstens eines Parameters eines in einer Leitung strömenden Mediums mit den kennzeichnenden Merkmalen des Anspruchs 1 hat demgegenüber den Vorteil, dass die Gebiete abgelöster Strömung, an den Seitenwänden des Bypass-Teils stark verkleinert werden, da sich die Strömung in Hauptströmungsrichtung gesehen schneller an die mit der Ausscheidungsöffnung versehene Seitenwand wieder anlegt, wodurch Druckverluste im Bereich der mit der Ausscheidungsöffnung versehenen Seitenwand reduziert werden und unerwünschte Pulsationen der Strömung vermieden werden. Die in Hauptströmungsrichtung gesehen hinter der Ausscheidungsöffnung angeordnete Strömungsleitwand erfordert nur einen geringen Mehraufwand bei der Fertigung und kann beispielsweise preisgünstig zusammen mit dem Leitungsteil als ein einziges Spritzgussteil hergestellt werden.

Vorteilhafte Ausgestaltungen und Weiterbildungen der Erfindung werden durch die kennzeichnenden Merkmale der abhängigen Ansprüche ermöglicht.

So ist in einem vorteilhaften Ausführungsbeispiel vorgesehen, dass nur eine Strömungsleitwand vorgesehen ist, die in Bezug auf die Mittelachse des Leitungsteils auf der gleichen Seite wie die mit der Ausscheidungsöffnung versehene Seitenwand angeordnet ist. Hierdurch entsteht ein asymmetrischer Aufbau hinter der Ausscheidungsöffnung. Diesem liegt die Überlegung zugrunde, dass eine völlige Vermeidung der Strömungsablösung schwerer zu realisieren ist, ale eine lokale Festlegung der Strömungsablösung auf einer Seite des Bypass-Teils, welche nicht die mit der Ausscheidungsöffnung versehen Seite ist.

Die Strömungsleitwand kann in der Hauptströmungsrichtung gesehen unmittelbar hinter der Rückwand des Bypass-Teils angeordnet sein und eine aerodynamische günstige Kontur aufweisen.

Besonders vorteilhaft ist es, wenn die Differenz aus dem Abstand der Strömungleitwand von der Mittelachse des Leitungsteils und dem Abstand der mit der Ausscheidungsöffnung versehenen Seitenwand des Bypass-Teils von der Mittelachse kleiner als 10 mm und vorzugsweise kleiner als 5 mm, jedoch größer als Null ist. Hierdurch wird erreicht, dass die Strömungsleitwand relativ zur Mittelachse gegenüber der Seitenwand seitlich versetzt ist und zwischen Seitenwand und Strömungsableitwand ein Spalt besteht. Hinter der Rückwand des Bypass-Teils bildet die abgelöste Strömung ein Totwassergebiet aus. Durch einen im Totwassergebiet bestehenden Unterdruck gegenüber dem Druck im Bereich der Seitenwände des Bypass-Teils wird die Strömung aus dem Ablösegebiet an der mit der Ausscheidungsöffnung versehenen Seitenwand durch den Spalt in das Totwassergebiet hinter der Rückwand des Bypass-Teils abgesaugt und dadurch das Ablösegebiet an der mit der Ausscheidungsöffnung versehenen Seitenwand vorteilhaft noch weiter verkleinert.

Weiterhin ist vorteilhaft, wenn die Strömungsleitwand mit einem in dem Leitungsteil in der Hauptströmungsrichtung gesehen vor dem Bypass-Teil angeordneten Strömungsableitteil kombiniert wird, das wenigstens eine der Hauptströmungsrichtung zugewandte Ableitfläche aufweist, die ausgehend von einer von dem Bypass-Teil beabstandeten Scheitellinie beidseitig zu den beiden Seitenwänden gleichmäßig derart hingekrümmt ist, dass die von der Scheitellinie abgewandten Enden der Ableitfläche mit den Seitenwänden fluchten. Zusätzlich kann in der Hauptströmungsrichtung wenigstens vor der mit der Ausscheidungsöffnung versehenen Seitenwand an der Ableitfläche oder wenigstens in direkter Nähe zu der Ableitfläche des Bypass-Teils eine turbulenzerzeugende Struktur vorgesehen sein, die Turbulenzen in der Grenzschicht der Strömung an dieser Seitenwand des Bypass-Teils hervorruft. Durch die Kombination der Strömungsleitwand hinter dem Bypass-Teil mit dem Strömungsableitteil vor dem Bypass-Teil wird eine Strömungsablösung auf der mit der Ausscheidungsöffnung versehenen Seitenwand des Bypass-Teils weitgehend vermieden.

Bei großen Innendurchmessern des Leitungsteils können aufgrund der geringeren Strömungsgeschwindigkeiten (sehr kleine Reynolds-Zahlen in Relation zur Längenausdehnung der Strömungsleitwand in der Hauptströmungsrichtung) und aufgrund der geringeren Beschleunigung der Strömung am Ort der Sensoreinrichtung nachteilige Strömungsablösungen auf den Außenflächen der Strömungsleitwand entstehen, welche wiederum Pulsationen hervorrufen können. Um dies zu vermeiden, ist es vorteilhaft, die Strömungsleitwand wenigstens auf einer Außenfläche mit turbulenzerzeugenden Strukturen zu versehen, die beispielsweise durch eine Reihe von vorzugsweise periodisch entlang einer Linie angeordneten von der Außenfläche der Strömungsleitwand abstehenden Vorsprüngen gebildet werden, die vorzugsweise in dem der Hauptströmungsrichtung zugewandten Abschnitt der Strömungsleitwand angeordnet sind und insbesondere ein kammartiges, zinnenartiges oder zackenförmiges Muster bilden. Durch die Vorsprünge wird die Strömungsgrenzschicht turbulent, was einen verstärkten Impulsaustausch von langsamen und schnellen Strömungsanteilen bewirkt. Die hervorgerufenen Turbulenzen wirken einer Ablösung von der Strömungsleitwand entgegen, so dass sich unerwünschte Ablösegebiete an der Strömungsleitwand vermeiden lassen.

### Zeichnungen

Ausführungsbeispiele der Erfindung sind in den Zeichnungen dargestellt und werden in der nachfolgenden Beschreibung erläutert. Es zeigt
Fig. 1 einen Querschnitt durch ein Ausführungsbeispiel der erfindungsgemäßen Vorrichtung,
Fig. 2 einen Querschnitt durch Fig: 1,
Fig. 3 eine Draufsicht auf das Ausführungsbeispiel in Fig. 1,
Fig. 4, 5 und 6 Querschnitte durch eine Sensoreinrichtung und eine Strömungsleitwand für weitere Ausführungsbeispiele der Erfindung,
Fig. 7 bis 9 Seitenansichten der Strömungsleitwand mit turbulenzerzeugenden Strukturen.

### Beschreibung der Ausführungsbeispiele

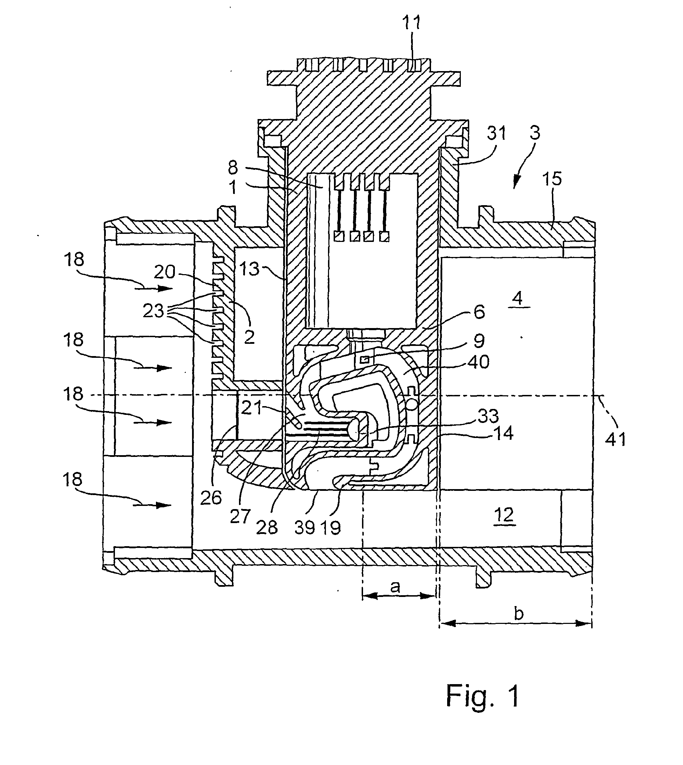

Fig. 1 zeigt ein Leitungsteil 3, das eine etwa zylindermantelförmige Wand 15 aufweist, die einen Leitungsdurchgang 12 umgibt, in dem ein Medium in einer Hauptströmungsrichtung strömt. Die Hauptströmungsrichtung ist durch entsprechende Pfeile 18 in Fig. 1 gekennzeichnet und verläuft dort von links nach rechts. Die Hauptströmungsrichtung ist definiert als die Richtung, in welcher das Medium ausgehend vom Eingang des Leitungsteils 3 bis zu dessen Ausgang in der Hauptsache durch den Leitungsdurchgang strömt, auch wenn lokale Wirbelbildungen und lokal vorhandene Ablösegebiete der Strömung lokale Abweichungen der Strömung von der Hauptströmungsrichtung aufweisen oder temporäre Richtungsänderungen auftreten. Die Hauptströmungsrichtung verläuft hier parallel zur Mittelachse 41 der zylindermantelförmigen Wand 15 des Leitungsteils 3. Das Leitungsteil 3 kann beispielsweise in eine Saugrohrleitung einer Brennkraftmaschine eingesetzt sein. Bei dem Medium handelt es sich beispielsweise um die zur Brennkraftmaschine strömende Luft.

Eine Sensoreinrichtung 1 ist an dem Leitungsteil 3 derart angeordnet, dass ein mit einer Kanalstruktur versehenes Bypass-Teil 6 der Sensoreinrichtung in den Leitungsdurchgang 12 fingerartig hineinragt und dort dem strömenden Medium mit einer vorbestimmten Ausrichtung ausgesetzt ist. Beim Einbau des Bypass-Teils 6 in die Leitung 3 ist sichergestellt, dass es in bezug auf die Hauptströmungsrichtung 18 des Mediums eine vorbestimmte Ausrichtung aufweist. Die Sensoreinrichtung 1 umfasst weiterhin einen elektrischen Anschluss 11 und eine Aufnahme für ein mit dem Anschluss 11 verbundenes Trägerteil 8, auf dem beispielsweise eine Auswerteelektronik angeordnet ist. Die Sensoreinrichtung kann mit dem Bypass-Teil 6 durch eine mit einem Flansch 31 umgebene Einstecköffnung der Wandung 15 des Leitungsteils 3 in den Leitungsdurchgang 12 eingeführt werden. Das Trägerteil 8 mit der Auswerteelektronik kann innerhalb und/oder außerhalb des Leitungsdurchgangs 12 angeordnet werden.

Die Sensoreinrichtung 1 weist ein auf einem Messelementträger in einem Messkanal 40 angeordnetes Messelement 9 auf, beispielsweise ein Dünnfilmmesselement mit einer Sensormembran mit einem Heizwiderstand und zwei temperaturabhängigen Widerständen, dessen Messdaten mit der Auswerteelektronik ausgewertet werden können. Mittels des Messelementes 9 wird beispielsweise als Parameter der Volumenstrom oder der Massenstrom des strömenden Mediums, insbesondere der Luftmassenstrom bestimmt. Weitere Parameter, die gemessen werden können, sind beispielsweise Druck, Temperatur, Konzentration eines Mediumbestandteils oder Strömungsgeschwindigkeit, die mittels geeigneter Sensorelemente bestimmt werden.

Das Bypass-Teil 6 hat ein Gehäuse mit einer beispielsweise quaderförmigen Struktur mit einer in der Einbauposition der Hauptströmungsrichtung 18 des Mediums zugewandten Frontwand 13 und einer davon abgewandten Rückwand 14, einer ersten Seitenwand 17 und einer dazu parallelen zweiten Seitenwand 16 und einer beispielsweise parallel zur Hauptströmungsrichtung verlaufenden, an dem in die Leitung eingeführten Ende angeordneten dritten Wand 19. Weiterhin weist das Teil 6 eine darin angeordnete Kanalstruktur mit einem Eingangsbereich 27 und einem von dem Eingangsbereich 27 abzweigenden Messkanal 40 auf. Ein Teilstrom des in der Hauptströmungsrichtung 18 strömenden Mediums gelangt durch eine Öffnung 21 an der Stirnseite 13 des Bypass-Teils 6 in den Eingangsbereich 27 der Kanalstruktur. Von dem Eingangsbereich 27 aus gelangt das Medium teilweise in den mit dem Messelement 9 versehenen Messkanal 40 und teilweise strömt es weiter in eine hinter der Abzweigungsstelle für den Messkanal liegende Ausscheidungszone 28, welche sich über wenigstens eine in der ersten Seitenwand 16 und/oder der zweiten Seitenwand 17 angeordnete Ausscheidungsöffnung 33 in den Leitungsdurchgang 12 öffnet. Die Ausscheidungsöffnung 33 ist bei dem in Fig. 1 gezeigten Ausführungsbeispiel parallel zur Hauptströmungsrichtung 18 angeordnet. Ein erster Teilstrom des in den Eingangsbereich 27 eingetretenen Mediums strömt vollständig in den Messkanal 40 und verlässt diesen durch den Ausgang 39 an der Wand 19, ein zweiter Teilstrom strömt vollständig durch die eine Ausscheidungsöffnung 33 in das Leitungsteil 3 zurück. In dem strömenden Medium sind beispielsweise Flüssigkeits- und/oder Festkörperpartikel vorhanden, wie Öl- oder Wasserpartikel, die das Messelement 9 verschmutzen oder beschädigen können. Durch die Ausscheidungsöffnung 33 und den geometrischen Aufbau der Kanalstruktur im Eingangsbereich gelangen die Flüssigkeits- und Festkörperpartikel nicht in den Messkanal, sondern strömen wieder in den Leitungsdurchgang 12 zurück.

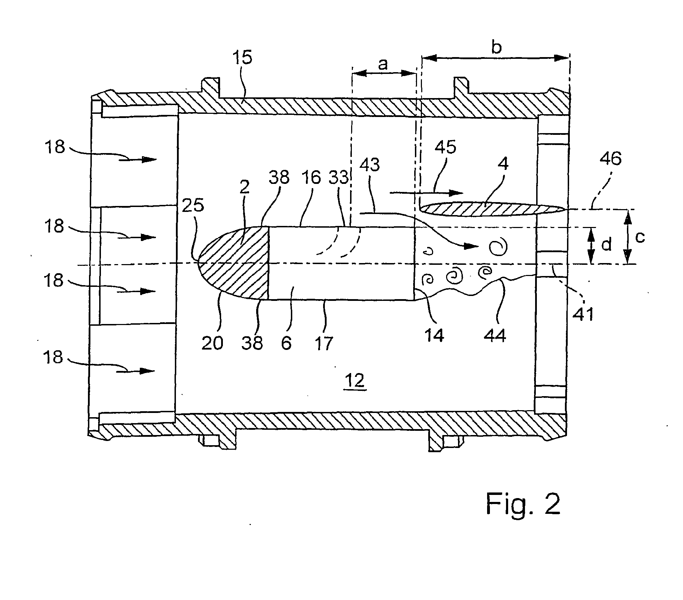

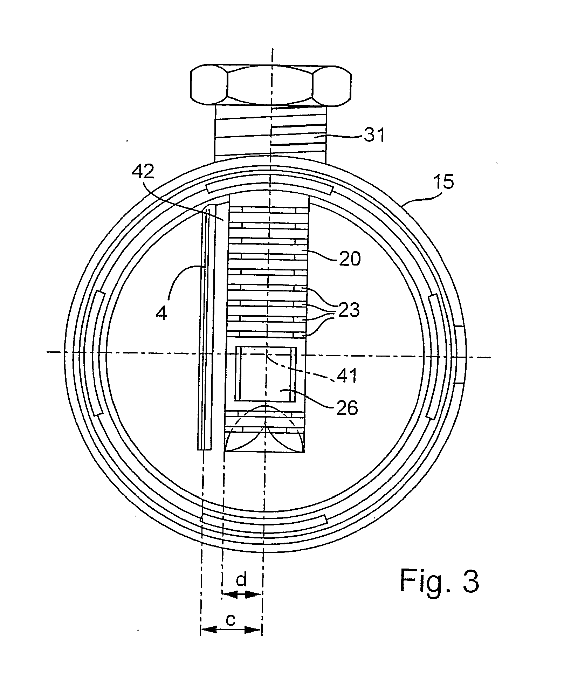

Wie in den Figuren 1 bis 3 zu erkennen ist, ist in dem Leitungsteil 3 in der Hauptströmungsrichtung 18 gesehen vorzugsweise direkt oder nahezu direkt (sehr kleiner Abstand) hinter der Rückwand 14 des Bypass-Teils 6 eine im wesentlichen parallel zu der mit der Ausscheidungsöffnung 33 versehenen Seitenwand 16 des Bypass-Teils 6 verlaufende Strömungsleitwand 4 angeordnet. Es ist auch möglich die Strömungsleitwand 4 in der Fig. 2 hinter der Ausscheidungsöffnung 33 anzuordnen und nicht erst hinter der Rückwand 14 des Bypass-Teils 6. Die Kontur der Strömungsleitwand 4 kann unterschiedlich ausgestaltet werden. Vorteilhaft ist die in Fig. 2 dargestellte aerodynamisch günstige Kontur. In diesem Zusammenhang sei erwähnt, dass die zur Seitenwand 16 im wesentlichen parallele Strömungsleitwand 4 nicht notwendiger Weise zwei ebene Außenflächen aufweisen muss. Die Kontur der Außenflächen kann auch leicht gekrümmt sein, wie dies in Fig. 2 dargestellt ist. Es ist jedoch zu erkennen, dass die Mittellinie 46 der Strömungsleitwand 4 parallel zur Seitenwand 16 verläuft und einen Abstand c von der Mittelachse 41 des Leitungsteils 3 aufweist. Die Mittellinie der Strömungsleitwand kann auch unter einem Winkel kleiner als +/- 15° zur Seitenwand verlaufen. Unter einer Strömungsleitwand, die zumindest annähernd parallel zu der Seitenwand verläuft, ist daher im Kontext der Anmeldung eine Strömungsleitwand zu verstehen, deren Mittellinie im Schnitt der Fig. 2 parallel oder in einem Winkel kleiner als 15° zu der Seitenwand 16 und damit auch zur Hauptströmungsrichtung 18 verläuft, da die Hauptströmungsrichtung parallel zur Seitenwand 16 ist. Die Längenausdehnung b der Strömungsleitwand 4 in Hauptströmungsrichtung 18 gesehen ist gleich oder größer als der Abstand a der Ausscheidungsöffnung 33 von der Rückwand 14. Beispielsweise ist der Abstand a = 10 mm und die Längenausdehnung b zwischen 20 und 50 mm groß. Je größer die Längenausdehnung b desto besser. Allerdings sind der Längenausdehnung b der Strömungsleitwand durch die Länge des Leitungsteils 3 Grenzen gesetzt.

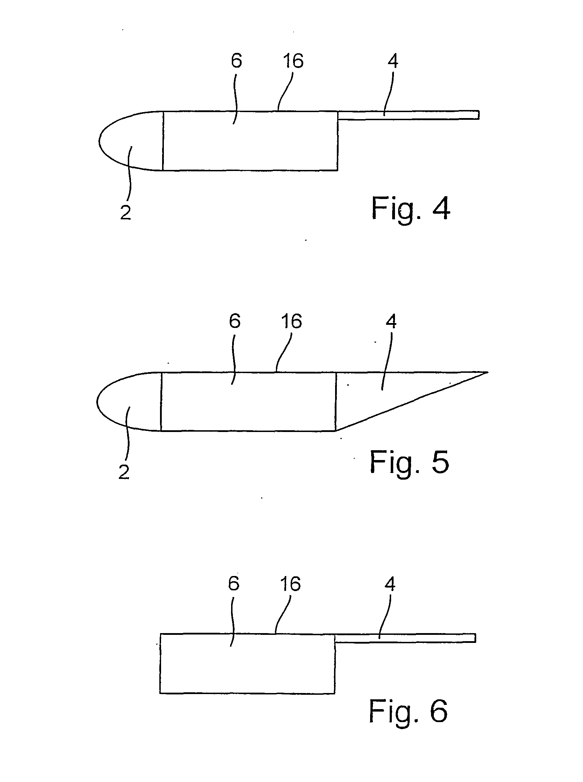

Wie in Fig. 2 weiterhin zu erkennen ist, ist der Abstand c der Mittellinie 46 der Strömungsleitwand 4 von der Mittelachse 41 des Leitungsteils 3 in diesem Ausführungsbeispiel größer als der Abstand d der mit der Ausscheidungsöffnung 33 versehenen Seitenwand 16 des Bypass-Teils 6 von der Mittelachse 41. Hierdurch entsteht ein Spalt 42 durch den ein Medienstrom 43 in das Totwassergebiet 44 hinter dem Bypass-Teil 6 gelangen kann. Die Differenz aus dem Abstand c der Strömungsleitwand 4 von der Mittelachse 41 und dem Abstand d der mit der Ausscheidungsöffnung 33 versehenen Seitenwand 16 von der Mittelachse 41 ist vorteilhaft kleiner als 10 mm und vorzugsweise kleiner als 5 mm und größer als 1 mm ausgebildet. Die Differenz c - d kann aber auch Null sein. Dies ist in den Ausführungsbeispielen der Figuren 4, 5 und 6 dargestellt, bei denen die Strömungsleitwand 4 in einer gemeinsamen Ebene mit der mit der Ausscheidungsöffnung 33 versehenen Seitenwand 16 angeordnet ist. In diesen Fällen exsistiert kein Spalt zwischen der Seitenwand 16 und der Strömungsleitwand 4. Besonders vorteilhaft ist jedoch die in Fig. 2 dargestellte Anordnung der Strömungsleitwand 4 mit dem Spalt.

Wie in Fig. 2 zu erkennen ist, ist nur eine Strömungsleitwand 4 vorgesehen ist, die in Bezug auf die Mittelachse 41 des Leitungsteils 3 auf der gleichen Seite wie die mit der Ausscheidungsöffnung 33 versehene Seitenwand 16 angeordnet ist. Die an den Seitenwänden 16,17 entlang strömende Luft löst sich an der durch die Rückwand 14 und die Seitenwand 17 gebildeten Kante ab, so dass ein in Fig. 2 dargestellte Totwassergebiet entsteht. Durch einen Unterdruck im Totwassergebiet gegenüber den Druckverhältnissen im Bereich der Seitenwände 16,17 wird auf der der Seitenwand 17 gegenüberliegenden Seitenwand 16 ein Teil der Luft durch den Spalt 42 zwischen der Strömungsleitwand 4 und der Rückwand 14 in das Totwassergebiet gesaugt (Bezugszeichen 43), wodurch sich das Ablösegebiet auf der mit der Ausscheidungsöffnung 33 versehenen Seitenwand 16 vorteilhaft verkleinert. Bei den Ausführungsbeispielen der Fig. 4, 5 und 6 wird das Ablösegebiet auf der Seitenwand 16 zumindest durch ein früheres Wiederanlegen der abgelösten Strömung an die Strömungsleitwand 4 ebenfalls verkleinert, wenn auch nicht so stark, wie bei dem in Fig. 2 dargestellten Ausführungsbeispiel.

Wie in Fig. 1 und Fig. 2 weiterhin dargestellt ist, kann zusätzlich ein Strömungsableitteil 2 in dem Leitungsteil 3 angeordnet, dass in der Hauptströmungsrichtung 18 gesehen unmittelbar vor dem Bypass-Teil 6 angeordnet ist. Das Strömungsableitteil 2 ist als separates Bauteil hergestellt, kann aber auch einstückig mit der Sensoreinrichtung 1 verbunden sein. Das Strömungsableitteil weist eine der Hauptströmungsrichtung 18 zugewandte Ableitfläche 20 auf. Wie am besten in Fig. 2 zu erkennen ist, ist die Ableitfläche 20 ausgehend von einer von dem Bypass-Teil 6 entgegen der Hauptströmungsrichtung abstehenden Scheitellinie 25 beidseitig zu den beiden Seitenwänden 16, 17 gleichmäßig derart hingekrümmt, dass die von der Scheitellinie abgewandten Enden 38 der Ableitfläche 20 fluchtend mit den Seitenwänden 16, 17 ausgebildet sind (die Enden 38 gehen stetig und ohne eine Kante zu bilden in die Seitenwände 16,17 über). In dem hier dargestellten bevorzugten Ausführungsbeispiel ist die Ableitfläche 20 elliptisch gekrümmt. Das Strömungsableitteil 2 weist weiterhin eine Durchgangsöffnung 26 auf, die mit der Öffnung 21 des Eingangsbereichs 27 der Kanalstruktur fluchtet, so dass ein Teilstrom des Medienstromes in der Hauptströmungsrichtung 18 durch die Durchgangsöffnung 26 und die Öffnung 21 in den Eingangsbereich 27 gelangt.

Weiterhin kann, wie in Fig. 1 und 2 dargestellt ist, eine turbulenzerzeugende Struktur 23 vorgesehen sein. Die turbulenzerzeugende Struktur kann durch eine Unstetigkeit und/oder Unebenheit (beispielsweise eine kleine Stufe, Kannte, Rippe usw.) an der oder zumindest in direkter Nähe zu der gleichmäßig gekrümmten Ableitfläche des Strömungsableitteils gebildet werden, so dass Turbulenzen in der Grenzschicht der Strömung entstehen. Bei dem in Fig. 1 gezeigten Ausführungbeispiel wird die Struktur durch mehrere in die Ableitfläche 20 eingelassene Schlitze 23 gebildet, die in jeweils einer senkrecht zu den Seitenwänden 16, 17 des Bypass-Teils 6 und parallel zur Hauptströmungsrichtung 18 verlaufenden Ebene angeordnet sind. Der auf die Ableitfläche 20 auftreffende Medienstrom wird teilweise an der Ableitfläche 20 entlang zu den Seitenwänden 16,17 umgeleitet, teilweise dringt er aber auch in die Schlitze 23 ein verlässt die Schlitze 23 schräg zur Hauptströmungsrichtung 18, wodurch kräftige Längswirbel entstehen, die in der Grenzschichtströmung an den Seitenwänden 16,17 Turbulenzen erzeugen, so dass die Grenzschicht auf jeden Fall turbulent wird und sich nicht ablöst.

Durch die Kombination des vor dem Bypass-Teil angeordneten Strömungsableitteils 2 mit der hinter dem Bypass-Teil angeordneten Strömungsleitwand 4 werden Ablösegebiete auf der mit der Ausscheidungsöffnung 33 versehenen Seitenwand 16 des Bypass-Teils besonders zuverlässig verkleinert.

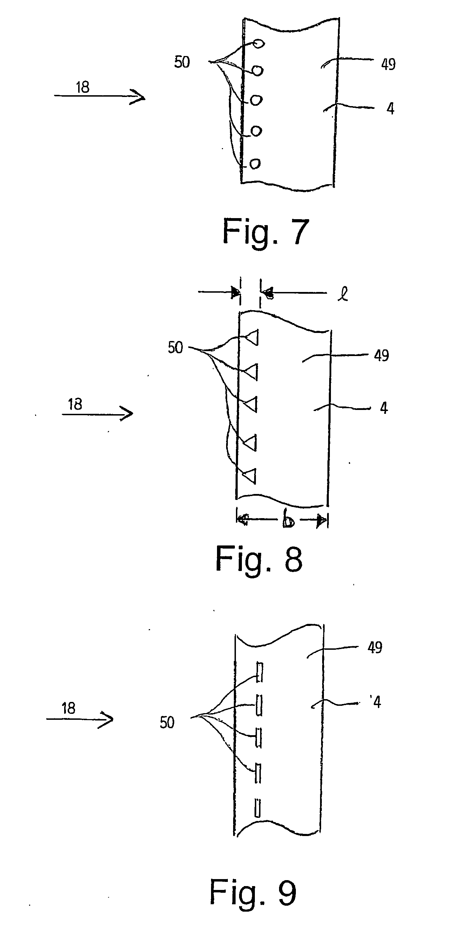

Um Strömungsablösungen auf den Außenflächen der Strömungsleitwand zu vermeiden, können die voneinander abgewandten zwei Außenflächen der Strömungsleitwand mit turbulenzerzeugenden Strukturen versehen sein, die beispielsweise durch eine Reihe von vorzugsweise periodisch entlang einer Linie angeordneten von der Außenfläche 49 der Strömungsleitwand 4 zwischen 0,2 bis 2 mm und vorzugsweise etwa 1 mm abstehenden Vorsprüngen gebildet werden. Wie in Fig. 7, Fig. 8 und Fig. 9 dargestellt ist, können die Strukturen beispielsweise ein kammartiges, zinnenartiges oder zackenförmiges Muster bilden. Wie in Fig. 8 dargestellt ist, sind die Strukturen 50 vorzugsweise im vorderen Teil der Strömungsleitwand angeordnet. Insbesondere ist vorgesehen, dass der Abstand e der Strukturen von dem der Hauptströmungsrichtung 18 zugewandten Ende der Strömungsleitwand 4 etwa 5% bis 25% der Längenausdehnung b der Strömungsleitwand 4 beträgt. Bei einer Herstellung der Strömungsleitwand als Spritzgussteil können die Strukturen im Spritzgussverfahren direkt mit hergestellt werden.

## Patentansprüche

1. Vorrichtung zur Bestimmung wenigstens eines Parameters eines in einer Leitung in einer Hauptströmungsrichtung (18) strömenden Mediums, insbesondere zur Bestimmung des Luftmassenstromes im Ansaugtrakt einer Brennkraftmaschine, umfassend ein einen Leitungsdurchgang bildendes Leitungsteil (3) mit einer entlang des Leitungsdurchgangs (12) verlaufenden Mittelachse (41) und eine Sensoreinrichtung (1) mit einem Bypass-Teil (6), das in dem Leitungsteil (3) derart angeordnet ist, dass ein Teilstrom des in dem Leitungsteil strömenden Mediums in einen Eingangsbereich (27) einer in dem Bypass-Teil ausgebildeten Kanalstruktur gelangt, wobei der Eingangsbereich (27) eine Ausscheidungsöffnung (33) aufweist, die sich an wenigstens einer von zwei parallel zu der Mittelachse (41) verlaufenden Seitenwänden (16, 17) des Bypass-Teils (6) in den Leitungsdurchgang öffnet und die einen Abstand (a) von der in Hauptströmungsrichtung stromabwärtigen Rückwand (14) des Bypass-Teils aufweist, **dadurch gekennzeichnet, dass** in dem Leitungsteil (3) in der Hauptströmungsrichtung (18) gesehen hinter der Ausscheidungsöffnung (33) eine zumindest annähernd parallel zu der mit der Ausscheidungsöffnung (33) versehenen Seitenwand (16) des Bypass-Teils (6) verlaufende Strömungsleitwand (4) angeordnet ist, deren Längenausdehnung (b) in Hauptströmungsrichtung (18) gesehen gleich oder größer als der Abstand (a) der Ausscheidungsöffnung (33) von der Rückwand (14) ist und deren Abstand (c) von der Mittelachse des Leitungsteils (3) größer oder gleich dem Abstand (d) der mit der Ausscheidungsöffnung versehenen Seitenwand (16) des Bypass-Teils (6) von der Mittelachse (41) ist.

2. Vorrichtung nach Anspruch 1, **dadurch gekennzeichnet, dass** nur eine Strömungsleitwand (4) vorgesehen ist, die in Bezug auf die Mittelachse (41) des Leitungsteils (3) auf der gleichen Seite wie die mit der Ausscheidungsöffnung (33) versehene Seitenwand (16) angeordnet ist. (Fig. 2)

3. Vorrichtung nach Anspruch 1 oder 2, **dadurch gekennzeichnet, dass** die Strömungsleitwand in der Hauptströmungsrichtung (18) gesehen direkt oder nahezu direkt hinter der Rückwand (14) des Bypass-Teils (6) angeordnet ist.

4. Vorrichtung nach einem der Ansprüche 1 bis 3, **dadurch gekennzeichnet, dass** die Differenz aus dem Abstand (c) der Strömungsleitwand (4) von der Mittelachse des Leitungsteils (3) und dem Abstand (d) der mit der Ausscheidungsöffnung (33) versehenen Seitenwand (16) des Bypass-Teils (6) von der Mittelachse (41) kleiner als 10 mm und vorzugsweise kleiner als 5 mm ist.

5. Vorrichtung nach Anspruch 1, **dadurch gekennzeichnet, dass** die Strömungsleitwand (4) eine aerodynamisch günstige Kontur aufweist.

6. Vorrichtung nach einem der vorstehenden Ansprüche, **dadurch gekennzeichnet, dass** in dem Leitungsteil (3) in der Hauptströmungsrichtung (18) gesehen vor dem Bypass-Teil (6) ein Strömungsableitteil (2) angeordnet ist, das wenigstens eine der Hauptströmungsrichtung (18) zugewandte Ableitfläche (20) aufweist, die ausgehend von einer von dem Bypass-Teil (6) beabstandeten Scheitellinie (25) beidseitig zu den beiden Seitenwänden (16, 17) gleichmäßig derart hingekrümmt ist, dass die von der Scheitellinie abgewandten Enden (38) der Ableitfläche (20) mit den Seitenwänden (16, 17) fluchten.

7. Vorrichtung nach Anspruch 6, **dadurch gekennzeichnet, dass** in der Hauptströmungsrichtung (18) wenigstens vor der mit der Ausscheidungsöffnung (28) versehenen Seitenwand (16) an der Ableitfläche (20) oder wenigstens in direkter Nähe zu der Ableitfläche (20) des Bypass-Teils (6) eine turbulenzerzeugende Struktur (23, 37) vorgesehen ist, die Turbulenzen in der Grenzschicht der Strömung an dieser Seitenwand (16) des Bypass-Teils hervorruft.

8. Vorrichtung nach Anspruch 1, **dadurch gekennzeichnet, dass** die Strömungsleitwand (4) wenigstens eine Außenfläche (49) und vorzugsweise zwei voneinander abgewandte Außenflächen aufweist, an denen turbulenzerzeugende Strukturen (50) angeordnet sind.

9. Vorrichtung nach Anspruch 8, **dadurch gekennzeichnet, dass** die turbulenzerzeugenden Strukturen (50) durch eine Reihe von vorzugsweise periodisch entlang einer Linie angeordneten von der Außenfläche (49) der Strömungsleitwand (4) abstehenden Vorsprüngen gebildet werden und insbesondere eine kammartiges, zinnenartiges oder zackenförmiges Muster bilden.

10. Vorrichtung nach Anspruch 8, **dadurch gekennzeichnet, dass** die turbulenzerzeugenden Strukturen von dem der Hauptströmungsrichtung (18) zugewandten Ende der Strömungsleitwand (4) aus gesehen auf den ersten 5% bis 25% der Längenausdehnung (b) der Strömungsleitwand (4) in der Hauptströmungsrichtung angeordnet sind.

## Claims

1. Device for determining at least one parameter of a medium flowing in a line in a main flow direction (18), in particular for determining the air mass flow in the intake section of an internal combustion engine, comprising a line part (3) which forms a line passage and has a central axis (41) running along the line passage (12), and comprising a sensor device (1) with a bypass part (6) which is arranged in the line part (3) in such a way that a partial flow of the medium flowing in the line part passes into an inlet region (27) of a duct structure formed in the bypass part, the inlet region (27) having a discharge opening (33) which opens into the line passage on at least one of two side walls (16, 17), which run parallel to the central axis (41), of the bypass part (6) and which has a spacing (a) from the rear wall (14), which is situated downstream in the main flow direction, of the bypass part, **characterized in that** a flow-guiding wall (4) is arranged in the line part (3) downstream of the discharge opening (33) as viewed in the main flow direction (18), which flow-guiding wall (4) runs at least approximately parallel to that side wall (16) of the bypass part (6) which is provided with the discharge opening (33), the longitudinal extent (b) of which flow-guiding wall (4) as viewed in the main flow direction (18) is equal to or greater than the spacing (a) of the discharge opening (33) from the rear wall (14), and the spacing (c) of which flow-guiding wall (4) from the central axis of the line part (3) is greater than or equal to the spacing (d) of that side wall (16) of the bypass part (6) which is provided with the discharge opening from the central axis (41).

2. Device according to Claim 1, **characterized in that** only one flow-guiding wall (4) is provided which is arranged on the same side of the central axis (41) of the line part (3) as that side wall (16) which is provided with the discharge opening (33) (Fig. 2).

3. Device according to Claim 1 or 2, **characterized in that** the flow-guiding wall is arranged directly or almost directly downstream of the rear wall (14) of the bypass part (6) as viewed in the main flow direction (18).

4. Device according to one of Claims 1 to 3, **characterized in that** the difference between the spacing (c) of the flow-guiding wall (4) from the central axis of the line part (3) and the spacing (d) of that side wall (16) of the bypass part (6) which is provided with the discharge opening (33) from the central axis (41) is less than 10 mm, and preferably less than 5 mm.

5. Device according to Claim 1, **characterized in that** the flow-guiding wall (4) has an aerodynamically favourable contour.

6. Device according to one of the preceding claims, **characterized in that** a flow-deflecting part (2) is arranged in the line part (3) upstream of the bypass part (6) as viewed in the main flow direction (18), which flow-deflecting part has at least one deflecting surface (20) which faces counter to the main flow direction (18) and which, proceeding from an apex line (25) spaced apart from the bypass part (6), is at both sides curved uniformly towards the two side walls (16, 17) in such a way that those ends (38) of the deflecting surface (20) which are remote from the apex line are aligned with the side walls (16, 17).

7. Device according to Claim 6, **characterized in that** a turbulence-generating structure (23, 27) is provided, at least upstream of that side wall (16) which is provided with the discharge opening (33) as viewed in the main flow direction (18), on the deflecting surface (20) or at least in the direct vicinity of the deflecting surface (20) of the bypass part (6), which turbulence-generating structure generates turbulence in the boundary layer of the flow at said side wall (16) of the bypass part.

8. Device according to Claim 1, **characterized in that** the flow-guiding wall (4) has at least one outer surface (49) and preferably two outer surfaces which face away from one another and on which turbulence-generating structures (50) are arranged.

9. Device according to Claim 8, **characterized in that** the turbulence-generating structures (50) are formed by a row of projections which are arranged preferably periodically along a line and which protrude from the outer surface (49) of the flow-guiding wall (4), and said turbulence-generating structures in particular form a comb-like, crenellated or serrated pattern.

10. Device according to Claim 8, **characterized in that** the turbulence-generating structures are arranged, as viewed from that end of the flow-guiding wall (4) which faces counter to the main flow direction (18), over the first 5% to 25% of the longitudinal extent (b) of the flow-guiding wall (4) in the main flow direction.

## Revendications

1. Dispositif pour déterminer au moins un paramètre d'un fluide qui circule dans une conduite dans une direction d'écoulement principale (18), notamment pour déterminer le débit massique d'air dans le système d'admission d'un moteur à combustion interne, comprenant une partie de conduite (3) formant un passage de conduite avec un axe médian (41) s'étendant le long du passage de conduite (12) et un dispositif de capteur (1) avec une partie de dérivation (6), qui est disposée dans la partie de conduite (3) de telle sorte qu'un courant partiel du fluide s'écoulant dans la partie de conduite parvienne dans une région d'entrée (27) d'une structure de canal réalisée dans la partie de dérivation, la région d'entrée (27) présentant une ouverture d'évacuation (33) qui s'ouvre sur au moins l'une de deux parois latérales (16, 17) de la partie de dérivation (6) s'étendant parallèlement à l'axe médian (41) dans le passage de conduite, et qui présente une distance (a) à la paroi arrière (14) de la partie de dérivation en aval dans la direction d'écoulement principale, **caractérisé en ce qu'**une paroi de guidage de l'écoulement (4) s'étendant au moins approximativement parallèlement à la paroi latérale (16) de la partie de dérivation (6) pourvue de l'ouverture d'évacuation (33) est disposée dans la partie de conduite (3), vu dans la direction d'écoulement principale (18), derrière l'ouverture d'évacuation (33), l'étendue en longueur (b) de la paroi de guidage d'écoulement (4), vue dans la direction d'écoulement principale (18), étant supérieure ou égale à la distance (a) de l'ouverture d'évacuation (33) à la paroi arrière (14) et sa distance (c) à l'axe médian de la partie de conduite (3) étant supérieure ou égale à la distance (d) de la paroi latérale (16) de la partie de dérivation (6) pourvue de l'ouverture d'évacuation à l'axe médian (41).

2. Dispositif selon la revendication 1, **caractérisé en ce qu'**il n'est prévu qu'une seule paroi de guidage de 'écoulement (4), qui est disposée par rapport à l'axe médian (41) de la partie de conduite (3), du même côté que la paroi latérale (16) pourvue de l'ouverture d'évacuation (33). (Figure 2)

3. Dispositif selon la revendication 1 ou 2, **caractérisé en ce que** la paroi de guidage de l'écoulement est disposée, vue dans la direction d'écoulement principale (18), directement ou presque directement derrière la paroi arrière (14) de la partie de dérivation (6).

4. Dispositif selon l'une quelconque des revendications 1 à 3, **caractérisé en ce que** la différence entre la distance (c) de la paroi de guidage de l'écoulement (4) à l'axe médian de la partie de conduite (3) et la distance (d) de la paroi latérale (16) de la partie de dérivation (6) pourvue de l'ouverture d'évacuation (33) à l'axe médian (41) est inférieure à 10 mm et de préférence est inférieure à 5 mm.

5. Dispositif selon la revendication 1, **caractérisé en ce que** la paroi de guidage de l'écoulement (4) présente un contour avantageux du point de vue aérodynamique.

6. Dispositif selon l'une quelconque des revendications précédentes, **caractérisé en ce qu'**une partie de déviation de l'écoulement (2) est disposée dans la partie de conduite (3), vue dans la direction d'écoulement principale (18), avant la partie de dérivation (6), laquelle partie de déviation de l'écoulement (2) présente au moins une surface de déviation (20) tournée vers la direction d'écoulement principale (18), qui, partant d'une ligne de sommet (25) espacée de la partie de dérivation (6), est courbée de manière uniforme des deux côtés vers les deux parois latérales (16, 17) de telle sorte que les extrémités (38) de la surface de déviation (20) opposées à la ligne de sommet soient en affleurement avec les parois latérales (16, 17).

7. Dispositif selon la revendication 6, **caractérisé en ce que**, dans la direction d'écoulement principale (18), au moins avant la paroi latérale (16) pourvue de l'ouverture d'évacuation (33), sur la surface de déviation (20) ou au moins à proximité immédiate de la surface de déviation (20) de la partie de dérivation (6), il est prévu une structure produisant des turbulences (23, 37), qui provoque des turbulences dans la couche limite de l'écoulement contre cette paroi latérale (16) de la partie de dérivation.

8. Dispositif selon la revendication 1, **caractérisé en ce que** la paroi de guidage de l'écoulement (4) présente au moins une surface extérieure (49) et de préférence deux surfaces extérieures opposées l'une à l'autre, sur lesquelles sont disposées des structures produisant des turbulences (50).

9. Dispositif selon la revendication 8, **caractérisé en ce que** les structures produisant des turbulences (50) sont formées par une rangée de saillies disposées de préférence périodiquement le long d'une ligne et saillant depuis la surface extérieure (49) de la paroi de guidage de l'écoulement (4), et forment notamment un motif en forme de peigne, de créneaux ou de dents.

10. Dispositif selon la revendication 8, **caractérisé en ce que** les structures produisant des turbulences, vues depuis l'extrémité de la paroi de guidage de l'écoulement (4) tournée vers la direction d'écoulement principale (18), sont disposées sur les premiers 5 % à 25 % de l'étendue en longueur (b) de la paroi de guidage de l'écoulement (4) dans la direction d'écoulement principale.
